# EUROPEAN PATENT APPLICATION

(11) **EP 4 712 367 A1**
(43) Date of publication of application: **18.03.2026**
(21) Application number: 25196929.1
(22) Date of filing: 20.08.2025
(51) Int. Cl.: H04B 10/2513

(54) **DISPERSION COMPENSATOR AND METHOD OF DISPERSION COMPENSATION**

(30) Priority: 14.09.2024 WO PCT/CN2024/119021; 01.07.2025 US 202519256214
(71) Applicant: II-VI Delaware, Inc., Wilmington, DE 19890 (US)
(72) Inventor: Du, Tengda, Wilmington, DE, 19890 (US); Zhang, Li, Wilmington, DE, 19890 (US); Thompson, Lance Robert, Wilmington, DE, 19890 (US); Kim, Inho, Wilmington, DE, 19890 (US); Xu, Xiaojie, Wilmington, DE, 19890 (US)
(74) Representative: Forresters IP LLP

(57) **Abstract**

In a dispersion compensator and method of use thereof a polarized beam splitter (PBS) reflects a light beam having a first instance of S-linear polarization to a first quarter-wave-plate which passes the light beam in a first direction. A first reflector reflects the light beam back through the first quarter-wave-plate in a second, opposite direction, whereupon the light beam now has a P-linear polarization, through the PBS to a second quarter-wave-plate which passes the light beam in a first direction. A second reflector reflects the light beam back through the second quarter-wave-plate in a second, opposite direction, whereupon the light beam now has a second instance of S-linear polarization, which is reflected by the PBS. The first or second reflector is a chirped volume Bragg grating (CVBG) that reflects spectral components of the reflected light beam at different depths of propagation of said spectral components in the CVBG.

## Description

### CROSS-REFERENCE TO RELATED APPLICATION

This application claims priority to PCT/CN2024/119021, filed September 14, 2024, the contents of which are incorporated herein by reference.

### BACKGROUND

### 1. Field

The present disclosure relates to dispersion compensation and, more specifically, to a dispersion compensator and a method of dispersion compensation.

### 2. Description of Related Art

A dispersion compensator is a device used in optical communication systems to correct chromatic dispersion, a phenomenon where different wavelengths of light travel at different speeds through an optical fiber, causing pulse broadening and signal distortion over long distances. Chromatic dispersion occurs because optical fibers have different refractive indices for different wavelengths. Over long distances, this causes light pulses (which contain multiple wavelengths) to spread out, leading to overlap and inter-symbol interference (ISI). A dispersion compensator introduces an opposite dispersion to that of the transmission fiber, effectively compressing the broadened pulses back to their original shape.

One type of prior art dispersion compensator may be a Chirped Volume Bragg Grating (CVBG) which heretofore was used as a reflective dispersion device. In accordance with the principles of the present disclosure, however, it would be desirable utilize the CVBG in a transmissive dispersion compensator.

### SUMMARY

Disclosed is a method of dispersion compensation comprising: (a) reflecting, by a polarized beam splitter (PBS), a light beam having a first instance of S-linear polarization; (b) passing the reflected light beam of step (a) through a first quarter-wave-plate in a first direction; (c) reflecting the light beam passed through the first quarter-wave-plate in the first direction in step (b) back through the first quarter-wave-plate in a second, opposite direction, whereupon the light beam has a P-linear polarization; (d) passing the light beam having the P-linear polarization through the PBS; (e) following step (d), passing the light beam having the P-linear polarization through a second quarter-wave-plate in a first direction; (f) reflecting the light beam passed through the second quarter-wave-plate in the first direction in step (e) back through the second quarter-wave-plate in a second, opposite direction, whereupon the light beam has a second instance of S-linear polarization; and (g) following step (f), reflecting, by the PBS, the light beam of step (f) having the second instance of S-linear polarization, wherein: the reflecting of step (c) or step (f) includes reflecting by a chirped volume Bragg grating (CVBG), wherein the CVBG reflects spectral components of the light beam at different depths of propagation of said spectral components into the CVBG thereby introducing a delay between said reflected spectral components of the reflected light beam.

Also disclosed is a dispersion compensator comprising: a polarized beam splitter (PBS) disposed, operative, and/or configured for receiving and reflecting a light beam having a first instance of S-linear polarization; a first quarter-wave-plate disposed, operative, and/or configured for passing the light beam reflected by the PBS in a first direction through the first quarter-wave-plate; a first reflector disposed, operative, and/or configured for reflecting the light beam passed through the first quarter-wave-plate in the first direction back through the first quarter-wave-plate in a second, opposite direction, wherein the light beam reflected by the first reflector back through the first quarter-wave-plate in the second, opposite direction exits the first quarter-wave-plate with a P-linear polarization and passes through the PBS; a second quarter-wave-plate disposed, operative, and/or configured for passing the light beam having the P-linear polarization that is passed through the PBS in a first direction through the second quarter-wave-plate; and a second reflector disposed, operative, and/or configured for reflecting the light beam passed through the second quarter-wave-plate in the first direction back through the second quarter-wave-plate in a second, opposite direction, wherein the light beam reflected by the second reflector back through the second quarter-wave-plate in the second, opposite direction exits the second quarter-wave-plate with a second instance of S-linear polarization and is reflected by the PBS, wherein: the first or second reflector comprises a chirped volume Bragg grating (CVBG), wherein the CVBG reflects spectral components of the reflected light beam at different depths of propagation of said spectral components into the CVBG thereby introducing a delay between said reflected spectral components of the reflected light beam.

### BRIEF DESCRIPTION OF THE DRAWINGS

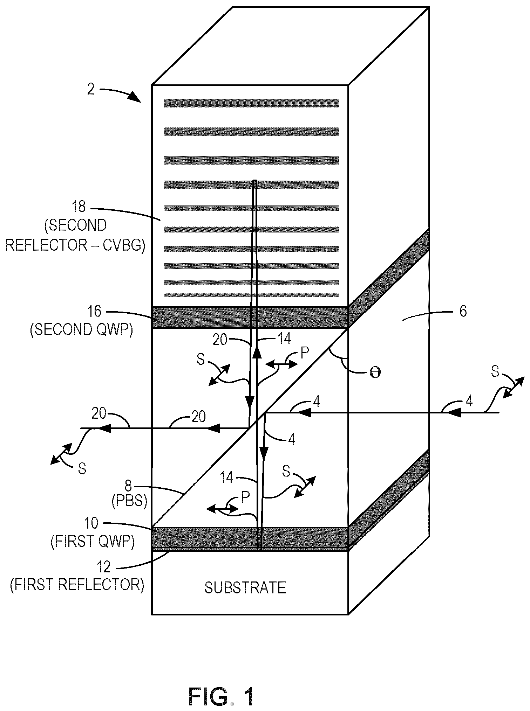

Figs. 1-6B are different example dispersion compensators in accordance with the principles of the present disclosure.

### DESCRIPTION

Various non-limiting examples will now be described with reference to the accompanying figures where like reference numbers correspond to like or functionally equivalent elements.

For purposes of the description hereinafter, terms like "end," "upper," "lower," "right," "left," "vertical," "horizontal," "top," "bottom," "lateral," "longitudinal," and derivatives thereof shall relate to the example(s) as oriented in the drawing figures. However, it is to be understood that the example(s) may assume various alternative variations and step sequences, except where expressly specified to the contrary. It is also to be understood that the specific example(s) illustrated in the attached drawings, and described in the following specification, are simply exemplary examples or aspects of the disclosure. Hence, the specific examples or aspects disclosed herein are not to be construed as limiting.

Herein, various example dispersion compensators 2 in accordance with the principles of the present disclosure will be described in connection with the use thereof.

With reference to Fig. 1, in one example dispersion compensator 2 in accordance with the principles of the present disclosure, a light beam 4 (e.g., a laser light beam) originating from an external upstream device (not shown) and having a first instance of an S-linear polarization is incident from the right (in Fig. 1) on a Polarized Beam Splitter (PBS) 8 which is disposed, operative, and/or configured for reflecting the light beam 4 having the first instance S-linear polarization downward to a first quarter-wave-plate (QWP) 10.

In an example, each PBS described in this disclosure may be oriented at an angle Θ of 45° with respect to an input side 6 of the dispersion compensator 2 where the light beam 4 first enters the dispersion compensator 2. However, this is not to be construed in a limiting sense since it is envisioned that each PBS may be oriented at a different angle as may be deemed suitable and/or desirable for a particular application.

After reflection by the PBS 8, the light beam 4 passes a first time through the first QWP 10, which modifies or changes the polarization of the light beam 4 in a manner known in the art, to a first reflector 12, which may be a mirror or other highly reflective coating. The first reflector 12 reflects the light beam 4 upward back through the first QWP 10 a second time, which further modifies or changes the polarization of the light beam 4 in a manner known in the art. After passing through the first QWP 10 the second time, the light beam (now indicated in Fig. 1 by the reference number 14) will have a P-linear polarization.

The light beam 14 having the P-linear polarization travels from the first QWP 10 upward to the PBS 8 which is disposed, operative, and/or configured to transmit or pass the light beam 14 a first time through a second QWP 16, which modifies or changes the polarization of the light beam 14 in a manner known in the art, and which passes the light beam 14 to a second reflector 18 in the nature of a Chirped Volume Bragg Grating (CVBG). Herein, the terms second reflector 18 and CVBG 18 may be used interchangeably.

In a manner known in the art, each CVBG disclosed in this disclosure reflects spectral components of the light beam 14 at different depths of propagation of said spectral components into the CVBG thereby introducing a delay between said reflected spectral components of the reflected light beam. In an example, the delay may longer for longer wavelengths travelling longer (or shorter) depending on whether the dispersion is "+" or "-". In an example, the delay may include at least one of: a positive delay that stretches one or more longer wavelength spectral components and a negative delay that compresses one or more shorter wavelength spectral components, wherein the one or more longer wavelength spectral components have longer wavelength(s) than the one or more shorter wavelength spectral components.

Next, the second reflector / CVBG 18 reflects the light beam 14 back downward through the second QWP 16 a second time, which further modifies or changes the polarization of the light beam 14 in a manner known in the art. After passing through the second QWP 10 the second time, the light beam (now indicated in Fig. 1 by the reference number 20) will have a second instance of S-linear polarization. Finally, the light beam 20 is incident on the PBS 8 which reflects to the left (in Fig. 1) and outputs the light beam 20 in the same propagation direction as the light beam 4 downstream for further processing or handling.

In an example, the thickness of each CVBG disclosed herein may be determined, in manner known in the art, by the wavelength of the laser light beam being reflected by the CVBG and the dispersion to be compensated for, as well as the CVBG glass refractive index. In an example, the pass band of the CVBG may desirably cover the desired wavelength range, laser bandwidth broadening, and anticipated ambient temperature changes of the CVBG.

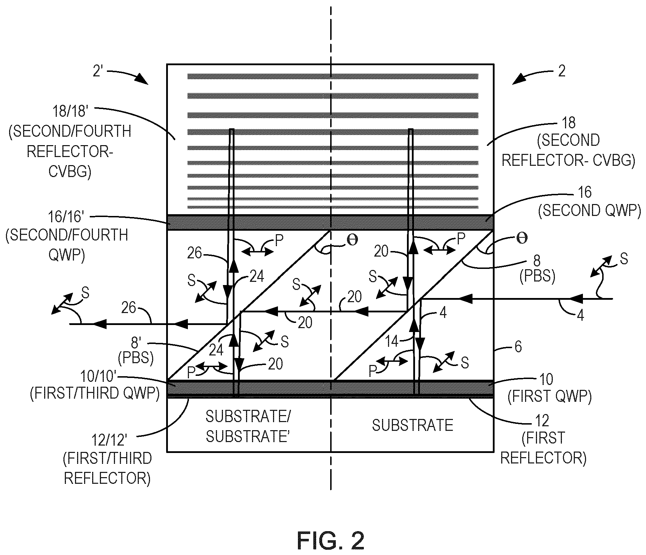

With reference to Fig. 2, another example dispersion compensator 2/2' in accordance with the principles of the present disclosure may include the first example dispersion compensator 2 shown in Fig. 1 positioned side-by-side with a second dispersion compensator 2'. In a first example (hereinafter, sometimes referred to as "the first example"), the first and second dispersion compensators 2 and 2' may be part of a single unified assembly including, for example, a common substrate, a single first QWP 10, a single first reflector 12, a single second QWP 16, and a single second reflector / CVBG 18.

In a second example (hereinafter, sometimes referred to as "the second example"), the first and second dispersion compensators 2 and 2' may be separate dispersion compensators (separated, for example, by the dashed line in Fig. 2) that may be operatively positioned and/or joined together in a manner to operate as described hereinafter. In this second example, the first dispersion compensator 2 may include the substrate, the first QWP 10, the first reflector 12, the second QWP 16, the second reflector / CVBG 18 described above in connection with Fig. 1 and the second dispersion compensator 2 may include the substrate or a substrate', a third QWP 10', a third reflector 12', a fourth QWP 16', and a fourth reflector / CVBG 18'.

Regardless if the example dispersion compensator shown in Fig. 2 is a single unified assembly (the first example) or includes separate dispersion compensators 2 and 2' (the second example), the operation of the first dispersion compensator 2 is the same as described above in connection with Fig. 1. The use of the second dispersion compensator 2' in combination with the light beam 20 having the second instance of an S-linear polarization output from the first dispersion compensator 2 will now be described.

In accordance with the principles of the present disclosure, the light beam 20 having the second instance of an S-linear polarization exiting the first dispersion compensator 2 is incident from the right (in Fig. 2) on a second Polarized Beam Splitter (PBS) 8' which is disposed, operative, and/or configured for reflecting the light beam 20 having the second instance S-linear polarization downward (in Fig. 2) to the first QWP 10 (in the first example) or a third QWP 10' (in the second example). The light beam 20 passes a first time through the first or the third QWP 10 or 10', which modifies or changes the polarization of the light beam 4 in a manner known in the art, to the first or a third reflector 12 or 12', which may be a mirror or other highly reflective coating. The first or the third reflector 12 or 12' reflects the light beam 4 upward back through the first QWP or the third QWP 10 or 10' a second time, which further modifies or changes the polarization of the light beam 4 in a manner known in the art. After passing through the first or the third QWP 10 or 10" (in the first or second example) the second time, the light beam (now indicated in Fig. 2 by the reference number 24) will have another instance of P-linear polarization.

The light beam 24 having the other instance of P-linear polarization travels upward from the first or the third QWP 10 or 10' (in the first or second example) to the second PBS 8' which is disposed, operative, and/or configured to transmit or pass the light beam 24 a first time through the second or a fourth QWP 16 or 16' (in the first or second example), which modifies or changes the polarization of the light beam 24 in a manner known in the art, and which passes the light beam 24 to the second or a fourth reflector / CVBG 18 or 18' (in the first or second example). Herein, the terms fourth reflector 18' and CVBG 18' may be used interchangeably.

In a manner known in the art, the CVBG 18 or 18' (in the first or second example) reflects spectral components of the light beam 24 at different depths of propagation of said spectral components into the CVBG 18 or 18' (in the first or second example) thereby introducing a delay between said reflected spectral components of the reflected light beam 24. In an example, the delay may longer for longer wavelengths travelling longer (or shorter) depending on whether the dispersion is "+" or "-"

Next, the CVBG 18 or 18' (in the first or second example) reflects the light beam 24 back downward through the second or fourth QWP 16 or 16' (in the first or second example) a second time, which further modifies or changes the polarization of the light beam 24 in a manner known in the art. After passing through the second or fourth QWP 16 or 16' (in the first or second example) the second time, the light beam (now indicated in Fig. 2 by the reference number 26) will have a third instance of an S-linear polarization. Finally, the light beam 26 is incident on the second PBS 8' which reflects to the left (in Fig. 2) and outputs the light beam 26 in the same propagation direction as the light beam 4 downstream for further processing or handling.

The dispersion compensator 2 shown in Fig. 2 may be useful where the height and/or the width for mounting the dispersion compensator 2 is limited. In this example, two (or more) cascaded PBS 8 and 8' may be used to lower the thickness of the CVBG 18 or 18' (in the first or second example) to achieve a desired dispersion.

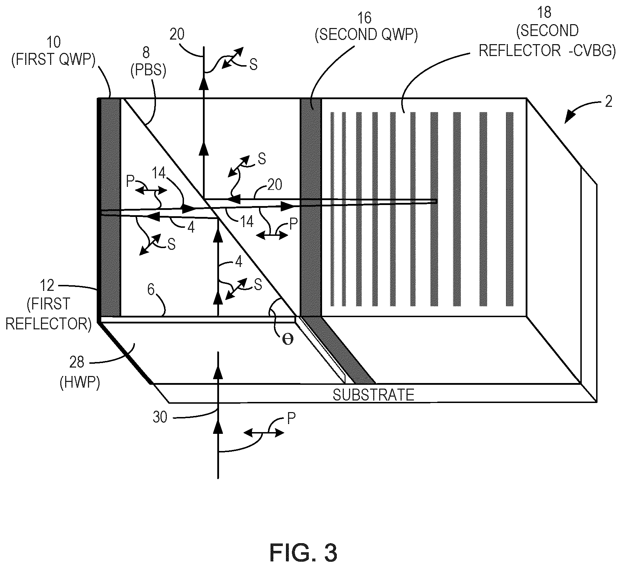

With reference to Fig. 3, yet another dispersion compensator 2 in accordance with the principles of the present disclosure may include the first example dispersion compensator 2 (shown in Fig. 1) disposed on its side on a substrate versus upright on a substrate as shown in Fig. 1. This third example dispersion compensator 2 may include a half-wave-plate (HWP) 28 disposed on the input side of the perspective view of the third example dispersion compensator 2 shown in Fig. 3.

In accordance with the principles of the present disclosure, an incoming horizontal light beam 30 originating from an external upstream device (not shown) and having a first instance of a P-linear polarization is incident on the input side of the HWP 28, i.e., from the bottom in Fig. 3. Upon passing through the HWP 28, the input light beam (now indicated in Fig. 3 by the reference number 4) will have a first instance of S-linear polarization. This light beam 4 having the first instance of an S-linear polarization is incident horizontally from the side of the third example dispersion compensator 2, i.e., from the bottom in Fig. 3, on the PBS 8 which is disposed, operative, and/or configured for reflecting the light beam 4 having the first instance S-linear polarization horizontally to the left (in Fig. 3) to the first quarter-wave-plate (QWP) 10.

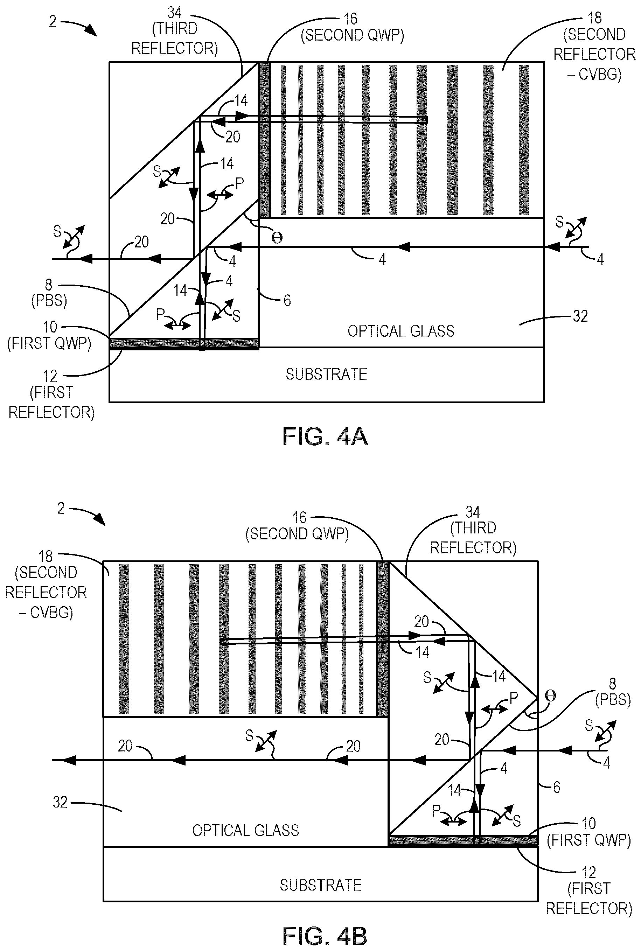

The light beam 4 passes a first time through the first QWP 10, which modifies or changes the polarization of the light beam 4 in a manner known in the art, to a first reflector 12, which may be a mirror or other highly reflective coating. The first reflector 12 reflects the light beam 4 horizontally to the right (in Fig. 4) back through the first QWP 10 a second time, which further modifies or changes the polarization of the light beam 4 in a manner known in the art. After passing through the first QWP 10 the second time, the light beam (now indicated in Fig. 3 by the reference number 14) will have a second instance of P-linear polarization.

The light beam 14 having the second instance of P-linear polarization travels to the right (in Fig. 3) from the first QWP 10 to the PBS 8 which is disposed, operative, and/or configured to transmit or pass, to the right in Fig. 3, the light beam 14 a first time through the second QWP 16, which modifies or changes the polarization of the light beam 14 in a manner known in the art, and which passes the light beam 14 to the second reflector / CVBG 18.

In this disclosure, each CVBG operates in the same manner as the CVBGs described above for reflecting spectral components of a light beam at different depths of propagation of said spectral components into the CVBG. Accordingly, hereinafter the operation of each CVBG will be omitted for simplicity,

Next, the second reflector / CVBG 18 reflects the light beam 14 horizontally to the left (in Fig. 3) back through the second QWP 16 a second time, which further modifies or changes the polarization of the light beam 14 in a manner known in the art. After passing through the second QWP 10 the second time, the light beam (now indicated in Fig. 3 by the reference number 20) will have a second instance of S-linear polarization. Finally, the light beam 20 is incident on the PBS 8 which reflects horizontally, upward (in Fig. 3), and outputs the light beam 20 in the same propagation direction as the incoming light beam 30 downstream for further processing or handling.

The dispersion compensators 2 shown in Fig. 3 may be useful where the height and/or width for mounting the dispersion compensator of Fig. 1 is limited.

With reference to Fig. 4A, in yet another dispersion compensator 2 in accordance with the principles of the present disclosure, a light beam 4 (e.g., a laser light beam) originating from an external upstream device (not shown) and having a first instance of an S-linear polarization may transmit horizontally through an optical glass 32, from the right in Fig. 4A, and be incident on a PBS 8 which is disposed, operative, and/or configured for reflecting the light beam 4 having the first instance S-linear polarization downward to a first quarter-wave-plate (QWP) 10.

The light beam 4 passes a first time through the first QWP 10, which modifies or changes the polarization of the light beam 4 in a manner known in the art, to a first reflector 12, which may be a mirror or other highly reflective coating. The first reflector 12 reflects the light beam 4 upward back through the first QWP 10 a second time, which further modifies or changes the polarization of the light beam 4 in a manner known in the art. After passing through the first QWP 10 the second time, the light beam (now indicated in Fig. 4A by the reference number 14) will have a P-linear polarization.

The light beam 14 having the P-linear polarization travels upward from the first QWP 10 to the PBS 8 which is disposed, operative, and/or configured to transmit or pass the light beam 14 upward to a third reflector 34 which is disposed, operative, and/or configured to reflect the light beam 14 to the right through a second QWP 16 a first time, which modifies or changes the polarization of the light beam 14 in a manner known in the art, and which passes the light beam 14 to a second reflector / CVBG 18 which is disposed on top of the optical glass 32.

Next, the second reflector / CVBG 18 reflects the light beam 14 to the left back through the second QWP 16 a second time, which further modifies or changes the polarization of the light beam 14 in a manner known in the art. After passing through the second QWP 10 the second time, the light beam (now indicated in Fig. 4A by the reference number 20) will have a second instance of S-linear polarization. This light beam 20 is then incident on the third reflector 34 which reflects the light beam 20 downward to the PBS 8 which reflects the light beam 20 to the left and outputs the light beam 20 in the same propagation direction as the light beam 4 downstream for further processing or handling.

In this disclosure, the names and reference numbers of the "first reflector 12", the "second reflector / CVBG 18", and the "third reflector 34" are strictly for the purpose of identifying one reflector from another and is not to be construed as limiting or indicating an order in the which these reflectors are used or encountered by light beams. Also, in the figures, various light beams illustrated as running or propagating adjacent to each other, e.g., light beams 14 and 20, is strictly for the purpose of illustration, to aid in identifying the light beams from each other, and is not to be construed as limiting since it is envisioned that light beams illustrated as running or propagating adjacent each other may, in practice, overlap.

With reference to Fig. 4B, in yet another dispersion compensator 2 in accordance with the principles of the present disclosure, a light beam 4 (e.g., a laser light beam) originating from an external upstream device (not shown) and having a first instance of an S-linear polarization may be incident from the right on a PBS 8 which is disposed, operative, and/or configured for reflecting the light beam 4 having the first instance S-linear polarization downward to a first QWP 10. The light beam 4 passes a first time through the first QWP 10, which modifies or changes the polarization of the light beam 4 in a manner known in the art, to a first reflector 12, which may be a mirror or other highly reflective coating. The first reflector 12 reflects the light beam 4 upward back through the first QWP 10 a second time, which further modifies or changes the polarization of the light beam 4 in a manner known in the art. After passing through the first QWP 10 the second time, the light beam (now indicated in Fig. 4B by the reference number 14) will have a P-linear polarization.

The light beam 14 having the P-linear polarization travels upward from the first QWP 10 to the PBS 8 which is disposed, operative, and/or configured to transmit or pass the light beam 14 upward to a third reflector 34 which is disposed, operative, and/or configured to reflect the light beam 14 to the left through a second QWP 16 a first time, which modifies or changes the polarization of the light beam 14 in a manner known in the art, and which passes the light beam 14 to a second reflector / CVBG 18 which is disposed on top of an optical glass 32.

Next, the second reflector / CVBG 18 reflects the light beam 14 to the right back through the second QWP 16 a second time, which further modifies or changes the polarization of the light beam 14 in a manner known in the art. After passing through the second QWP 10 the second time, the light beam (now indicated in Fig. 4B by the reference number 20) will have a second instance of S-linear polarization. This light beam 20 is then incident on the third reflector 34 which reflects the light beam 20 downward to the PBS 8 which reflects to the left and outputs the light beam 20 through the optical glass 32 in the same propagation direction as the light beam 4 downstream for further processing or handling.

The dispersion compensators 2 shown in Figs. 4A and 4B may be useful where the height for mounting the dispersion compensator of, for example, Fig. 1 or 2, may be limited.

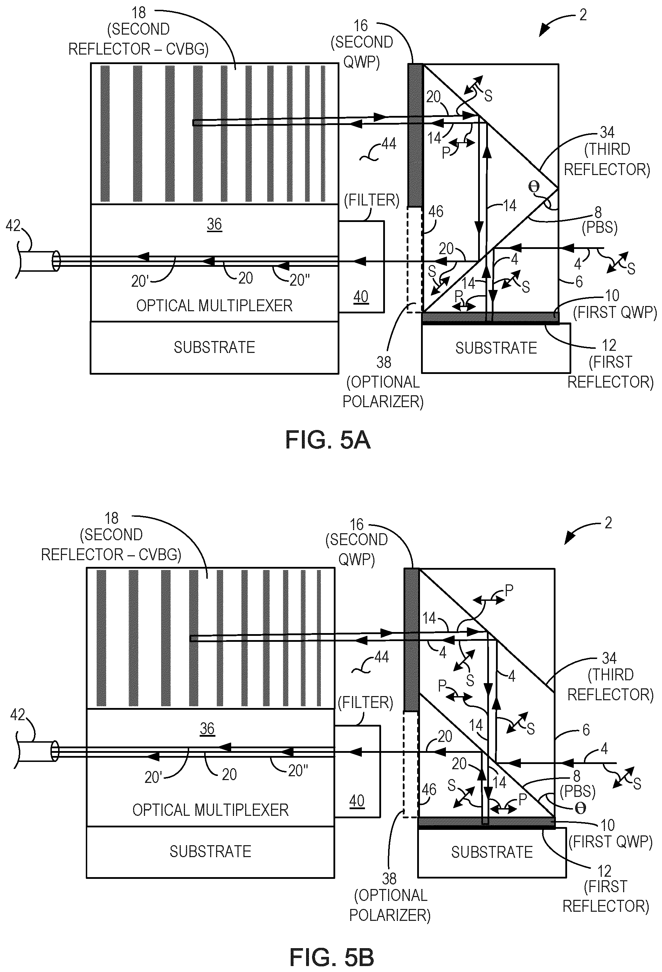

With reference to Fig. 5A, in yet another dispersion compensator 2 in accordance with the principles of the present disclosure, a light beam 4 (e.g., a laser light beam) originating from an external upstream device (not shown) and having a first instance of an S-linear polarization may be incident from the right on a PBS 8 which is disposed, operative, and/or configured for reflecting the light beam 4 having the first instance S-linear polarization downward to a first QWP 10. The light beam 4 passes a first time through the first QWP 10, which modifies or changes the polarization of the light beam 4 in a manner known in the art, to a first reflector 12, which may be a mirror or other highly reflective coating. The first reflector 12 reflects the light beam 4 back through the first QWP 10 a second time, which further modifies or changes the polarization of the light beam 4 in a manner known in the art. After passing through the first QWP 10 the second time, the light beam (now indicated in Fig. 5B by the reference number 14) will have a P-linear polarization.

The light beam 14 having the P-linear polarization travels upward from the first QWP 10 to the PBS 8 which is disposed, operative, and/or configured to transmit or pass the light beam 14 upward to a third reflector 34 which is disposed, operative, and/or configured to reflect the light beam 14 to the left through a second QWP 16 a first time, which modifies or changes the polarization of the light beam 14 in a manner known in the art, and which passes the light beam 14 to a second reflector / CVBG 18 which is disposed on top of an optical multiplexer 36. In this example dispersion compensator 2, the second QWP 16 and the second reflector / CVBG 18 may be spaced from each other by a gap 44.

Next, the second reflector / CVBG 18 reflects the light beam 14 to the right back through the second QWP 16 a second time, which further modifies or changes the polarization of the light beam 14 in a manner known in the art. After passing through the second QWP 10 the second time, the light beam (now indicated in Fig. 5A by the reference number 20) will have a second instance of S-linear polarization.

This light beam 20 is then incident from the left on the third reflector 34 which reflects the light beam 20 downward to the PBS 8 which reflects the light beam 20 to the left and outputs the light beam 20 to the optical multiplexer 36 via a filter 40, e.g., a bandpass filter, of the optical multiplexer 36 and an optional polarizer 38 disposed between the PBS 8 and the filter 40. In this example dispersion compensator 2, the optical multiplexer 36 and an output surface 46 of the dispersion compensator 2 may be spaced from each other by the gap 44 in which the filter 40 may be disposed or reside.

In an example, the optical multiplexer 36 may be configured, in a manner known in the art, to multiplex or combine a number of different light beams (e.g., 2, 3, 4 or more light beams) originating from different sources or channels and having different wavelengths and to output the multiplexed or combined light beams to an output optical fiber 42. Each light beam input to the optical multiplexer 36 may first pass through a dedicated filter, e.g., like filter 40, which may configured to pass to the optical multiplexer 36 only a desired wavelength. In Fig. 5A, while only one filter 40 is shown for simplicity, it is to be appreciated that the optical multiplexer 36 may also include additional filters 40 (not shown) for filtering light beams (not shown) of other wavelengths.

In a non-limiting example, the optical multiplexer 36 may, in a manner known in the art, combine light beams 20, 20', and 20" of wavelengths WL1, WL2, and WL3 input into the optical multiplexer 36 after passing through appropriate wavelength filters (only filter 40 is shown) and output the combined light beams 20, 20', and 20" to the optical fiber 42 for propagation of the combine light beams 20, 20', and 20" downstream for further processing or handling. In this example, at least one light beam, e.g., light beam 20, input into the optical multiplexer 36 may first be processed by the elements of the dispersion compensator 2 comprising: the PBS 8; the first and second QWPs 10 and 16; and the first through third reflectors 12, 18, and 34. As needed, each other light beam 20' and 20" may be input directly into the optical multiplexer 36, i.e., without first being processed by another dispersion compensator, or may be first processed by another dispersion compensator (not shown), like dispersion compensator 2 shown in Fig. 5A, and then input into the optical multiplexer 36.

With reference to Fig. 5B, in yet another dispersion compensator 2 in accordance with the principles of the present disclosure, a light beam 4 (e.g., a laser light beam) originating from an external upstream device (not shown) and having a first instance of an S-linear polarization may be incident from the right on a PBS 8 which is disposed, operative, and/or configured for reflecting the light beam 4 having the first instance S-linear polarization upward to a third reflector 34 which reflects the light beam 4 to the left through a second QWP 16.

The light beam 4 passes a first time through the second QWP 16, which modifies or changes the polarization of the light beam 4 in a manner known in the art, to a second reflector / CVBG 18. In this example dispersion compensator 2, the second QWP 16 and the second reflector / CVBG 18 may be spaced from each other by a gap 44.

Next, the second reflector / CVBG 18 reflects the light beam 4 back to the right back through the second QWP 16 a second time, which further modifies or changes the polarization of the light beam 4 in a manner known in the art. After passing through the second QWP 10 the second time, the light beam (now indicated in Fig. 5B by the reference number 14) will have a P-linear polarization. This light beam 14 is then incident on the third reflector 34 which reflects the light beam 14 downward to the PBS 8 which is disposed, operative, and/or configured to transmit or pass the light beam 14 downward to a first QWP 10.

The light beam 14 passes a first time through the first QWP 10, which modifies or changes the polarization of the light beam 14 in a manner known in the art, to a first reflector 12, which may be a mirror or other highly reflective coating. The first reflector 12 reflects the light beam 14 upward back through the first QWP 10 a second time, which further modifies or changes the polarization of the light beam 14 in a manner known in the art. After passing through the first QWP 10 the second time, the light beam (now indicated in Fig. 5B by the reference number 20) will have a second instance of S-linear polarization.

The light beam 20 having the second instance of S-linear polarization travels from the first QWP 10 to the PBS 8 which is disposed, operative, and/or configured to reflect the light beam 20 to the left and output the light beam 20 to the optical multiplexer 36 via a filter 40, e.g., a bandpass filter, of the optical multiplexer 36 and an optional polarizer 38 disposed between the PBS 8 and the filter 40. In this example dispersion compensator 2, the optical multiplexer 36 and an output surface 46 of the dispersion compensator 2 may be spaced from each other by the gap 44 in which the filter 40 may be disposed or reside.

In an example, the optical multiplexer 36 may be configured, in a manner known in the art, to multiplex or combine a number of different light beams (e.g., 2, 3, 4 or more light beams) originating from different sources or channels and having different wavelengths and to output the multiplexed or combined light beams to an output optical fiber 42. Each light beam input to the optical multiplexer 36 may first pass through a dedicated filter, e.g., like filter 40, which may configured to pass to the optical multiplexer 36 only a desired wavelength. In Fig. 5B, while only one filter 40 is shown for simplicity, it is to be appreciated that the optical multiplexer 36 may also include additional filters 40 (not shown) for filtering light beams (not shown) of other wavelengths.

In a non-limiting example, the optical multiplexer 36 may, in a manner known in the art, combine light beams 20, 20', and 20" of wavelengths WL1, WL2, and WL3 input into the optical multiplexer 36 after passing through appropriate wavelength filters (only filter 40 is shown) and output the combined light beams 20, 20', and 20" to the optical fiber 42 for propagation of the combine light beams 20, 20', and 20" downstream for further processing or handling. In this example, at least one light beam, e.g., light beam 20, input into the optical multiplexer 36 may first be processed by the elements of the dispersion compensator 2 comprising: the PBS 8; the first and second QWPs 10 and 16; and the first through third reflectors 12, 18, and 34. As needed, each other light beam 20' and 20" may be input directly into the optical multiplexer 36, i.e., without first being processed by another dispersion compensator, or may be first processed by another dispersion compensator (not shown), like dispersion compensator 2 shown in Fig. 5B, and then input into the optical multiplexer 36.

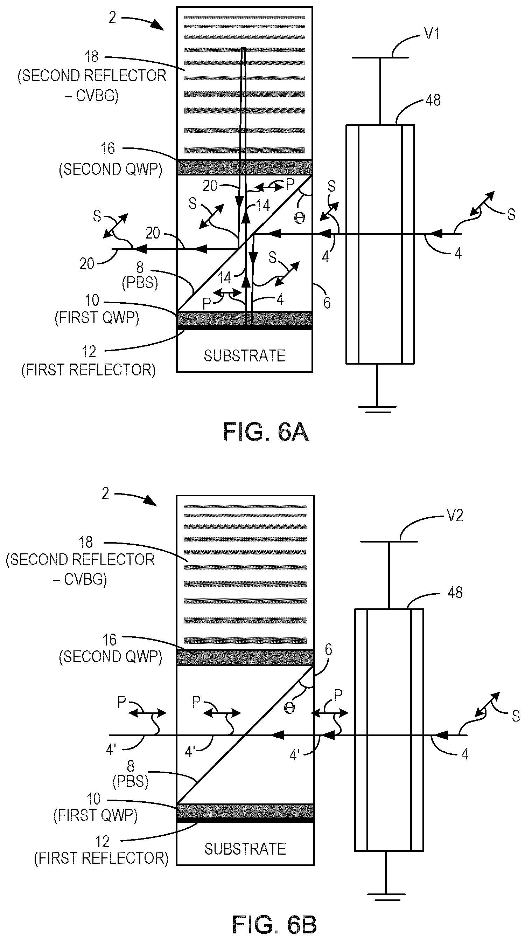

With reference to Figs. 6A-6B, another example in accordance with the principles of the present disclosure may include any one of the dispersion compensators 2 shown in Figs. 1 - 5B and described above used in combination with a phase control means such as a tunable retarder 48, e.g., a Liquid Crystal (LC) retarder, which is programmable or controllable under the control of an externally applied voltage V for controlling a polarization of the light beam 4 input into the dispersion compensator 2.

For the purpose of this example, the retarder 48 will be described as used with the dispersion compensator 2 shown in Fig. 1. However, this is not to be construed as limiting since, as noted above, it is envisioned that the retarder 48 may be used with any one of the dispersion compensators 2 shown and described above.

Referring now to Fig. 6A, a light beam 4 (e.g., a laser light beam) originating from an external upstream device (not shown) and having a first instance of an S-linear polarization is incident (from the right) on the retarder 48 which is programmed or configured by a voltage V1 applied by an external voltage source (not shown) to pass the light beam 4 to the input side 6 of the dispersion compensator 2. After passing through the input side 6 of the dispersion compensator 2, the light beam 4 is incident from the right (in Fig. 6A) on the Polarized Beam Splitter (PBS) 8 which is disposed operative, and/or configured for reflecting the light beam 4 having the first instance S-linear polarization downward to the first quarter-wave-plate (QWP) 10.

After reflection by the PBS 8, the light beam 4 passes a first time through the first QWP 10, which modifies or changes the polarization of the light beam 4 in a manner known in the art, to the first reflector 12, which may be a mirror or other highly reflective coating. The first reflector 12 reflects the light beam 4 upward back through the first QWP 10 a second time, which further modifies or changes the polarization of the light beam 4 in a manner known in the art. After passing through the first QWP 10 the second time, the light beam (now indicated in Fig. 6A by the reference number 14) will have a P-linear polarization.

The light beam 14 having the P-linear polarization travels from the first QWP 10 upward to the PBS 8 which is disposed, operative, and/or configured to transmit or pass the light beam 14 a first time through a second QWP 16, which modifies or changes the polarization of the light beam 14 in a manner known in the art, and which passes the light beam 14 to the second reflector / CVBG 18.

In a manner known in the art, the second reflector / CVBG 18 reflects spectral components of the light beam 14 at different depths of propagation of said spectral components into the second reflector / CVBG 18 thereby introducing a delay between said reflected spectral components of the reflected light beam. In an example, the delay may be longer for longer wavelengths travelling longer (or shorter) depending on whether the dispersion is "+" or "-"

Next, the second reflector / CVBG 18 reflects the light beam 14 back downward through the second QWP 16 a second time, which further modifies or changes the polarization of the light beam 14 in a manner known in the art. After passing through the second QWP 10 the second time, the light beam (now indicated in Fig. 6A by the reference number 20) will have a second instance of S-linear polarization. Finally, the light beam 20 is incident on the PBS 8 which reflects to the left (in Fig. 6A) and outputs the light beam 20 in the same propagation direction as the incoming the light beam 4 downstream for further processing or handling.

Referring now to Fig. 6B, in another example, it may be desirable to program or configure the retarder 48 of Fig. 6A with a voltage V2 applied by the external voltage source (not shown) whereupon the retarder 48 changes the polarization of the light beam 4, originating from an external upstream device (not shown) and incident (from the right) on the retarder 48, from an S-linear polarization to a light beam 4' having a P-linear polarization. In this example, the PBS 8 is configured to pass the light beam 4' having the P-linear polarization, whereupon the light beam 4' passes directly through the PBS 8 and exits the dispersion compensator 2 with the P-linear polarization without undergoing dispersion compensation in the manner described above in connection with Fig. 6A via the first QWP 10, the first reflector 12, the second QWP 16, and the second reflector / CVBG 18.

In an example, the PBS 8 of each dispersion compensator described in this disclosure is described as being configured to reflect each light beam having an S-linear polarizations and to pass each light beam having a P-linear polarization. However, this is not to be construed as limiting since it is envisioned that one or more of the PBS' 8 described in this disclosure may configured to reflect light beams having P-linear polarization and to pass light beams having a S-linear polarization. In this example, the polarizations of the incoming light beams 4 described in this disclosure may have a P-linear polarization whereupon the PBS 8 and the other elements of each dispersion compensator may be configured to act in a similar manner as described in this disclosure but with each instance of S-linear polarization replaced with an instance of P-linear polarization and vice versa.

Other non-limiting examples or aspects of this disclosure are set forth in the following illustrative and exemplary numbered clauses
Clause 1: A method of dispersion compensation comprises: (a) reflecting, by a polarized beam splitter (PBS), a light beam having a first instance of S-linear polarization; (b) passing the reflected light beam of step (a) through a first quarter-wave-plate in a first direction; (c) reflecting the light beam passed through the first quarter-wave-plate in the first direction in step (b) back through the first quarter-wave-plate in a second, opposite direction, whereupon the light beam has a P-linear polarization; (d) passing the light beam having the P-linear polarization through the PBS; (e) following step (d), passing the light beam having the P-linear polarization through a second quarter-wave-plate in a first direction; (f) reflecting the light beam passed through the second quarter-wave-plate in the first direction in step (e) back through the second quarter-wave-plate in a second, opposite direction, whereupon the light beam has a second instance of S-linear polarization; and (g) following step (f), reflecting, by the PBS, the light beam of step (f) having the second instance of S-linear polarization, wherein: the reflecting of step (c) or step (f) includes reflecting by a chirped volume Bragg grating (CVBG), wherein the CVBG reflects spectral components of the light beam at different depths of propagation of said spectral components into the CVBG thereby introducing a delay between said reflected spectral components of the reflected light beam.
Clause 2: The method of dispersion compensation of clause 1, wherein the delay includes at least one of: a positive delay that stretches one or more longer wavelength spectral components; and a negative delay that compresses one or more shorter wavelength spectral components, wherein the one or more longer wavelength spectral components have longer wavelength(s) than the one or more shorter wavelength spectral components.
Clause 3: The method of dispersion compensation of clause 1 or 2, further comprising: prior to step (a), outputting, from a half-wave-plate, a phase control means, or an optical glass to the polarized beam splitter (PBS), the light beam having the first instance of S-linear polarization.
Clause 4: The method of dispersion compensation of any one of clauses 1-3, further including, one of the following: between steps (d) - (e), reflecting, by a reflector, the light beam having the P-linear polarization to the second quarter-wave-plate and, between steps (f) - (g), reflecting, by the reflector, the light beam having the second instance of S-linear polarization to the PBS; and between steps (a) - (b), reflecting, by a reflector, the light beam having the first instance of S-linear polarization to the first quarter-wave-plate and, between steps (c) - (d) reflecting, by the reflector, the light beam having the P-linear polarization to the PBS.
Clause 5: The method of dispersion compensation of any one of clauses 1-4, wherein step (g) includes reflecting, by the PBS, the light beam of step (f) through an optical glass or an optical multiplexer.
Clause 6. The method of dispersion compensation of any one of clauses 1-5, further comprising: (h) following step (g), reflecting, by a second PBS, the light beam having the second instance of S-linear polarization; (i) passing the reflected light beam of step (h) through the first or a third quarter-wave-plate in a first direction; (j) reflecting the light beam passed through the first or the third quarter-wave-plate in the first direction in step (i) back through the first or the third quarter-wave-plate in a second, opposite direction, whereupon the light beam has a second instance of P-linear polarization; (k) passing the light beam having the second instance of P-linear polarization through the second PBS; (l) following step (k), passing the light beam having the second instance P-linear polarization through the second or a fourth quarter-wave-plate in a first direction; (m) reflecting the light beam passed through the second or the fourth quarter-wave-plate in the first direction in step (l) back through the second quarter-wave-plate in a second, opposite direction, whereupon the light beam has a third instance of S-linear polarization; and (n) following step (m), reflecting, by the second PBS, the light beam of step (m) having the third instance of S-linear polarization, wherein: the reflecting of step (j) or step (m) includes reflecting by the same or a different CVBG as the reflecting in step (c) or step (f), respectively.
Clause 7. A dispersion compensator comprising: a polarized beam splitter (PBS) disposed, operative, and/or configured for receiving and reflecting a light beam having a first instance of S-linear polarization; a first quarter-wave-plate disposed, operative, and/or configured for passing the light beam reflected by the PBS in a first direction through the first quarter-wave-plate; a first reflector disposed, operative, and/or configured for reflecting the light beam passed through the first quarter-wave-plate in the first direction back through the first quarter-wave-plate in a second, opposite direction, wherein the light beam reflected by the first reflector back through the first quarter-wave-plate in the second, opposite direction exits the first quarter-wave-plate with a P-linear polarization and passes through the PBS; a second quarter-wave-plate disposed, operative, and/or configured for passing the light beam having the P-linear polarization that is passed through the PBS in a first direction through the second quarter-wave-plate; and a second reflector disposed, operative, and/or configured for reflecting the light beam passed through the second quarter-wave-plate in the first direction back through the second quarter-wave-plate in a second, opposite direction, wherein the light beam reflected by the second reflector back through the second quarter-wave-plate in the second, opposite direction exits the second quarter-wave-plate with a second instance of S-linear polarization and is reflected by the PBS, wherein: the first or second reflector comprises a chirped volume Bragg grating (CVBG), wherein the CVBG reflects spectral components of the reflected light beam at different depths of propagation of said spectral components into the CVBG thereby introducing a delay between said reflected spectral components of the reflected light beam.
Clause 8: The dispersion compensator of clause 7, wherein the delay includes at least one of: a positive delay that stretches one or more longer wavelength spectral components; and a negative delay that compresses one or more shorter wavelength spectral components, wherein the one or more longer wavelength spectral components have longer wavelength(s) than the one or more shorter wavelength spectral components.
Clause 9: The dispersion compensator of clause 7 or 8, further including: a second PBS disposed, operative, and/or configured for receiving and reflecting the light beam having the second instance of S-linear polarization that was reflected by the PBS; the first or a third quarter-wave-plate disposed, operative, and/or configured for passing the light beam reflected by the second PBS in a first direction through the first or third quarter-wave-plate; the first or a third reflector disposed, operative, and/or configured for reflecting the light beam passed through the first or the third quarter-wave-plate in the first direction back through the first of the third quarter-wave-plate in a second, opposite direction, wherein the light beam reflected by the first or the third reflector back through the first or the third quarter-wave-plate in the second, opposite direction exits the first or the third quarter-wave-plate with a second instance of P-linear polarization and passes through the second PBS; the second or a fourth quarter-wave-plate disposed, operative, and/or configured for passing the light beam having the second instance of P-linear polarization that is passed through the PBS in a first direction through the second or the fourth quarter-wave-plate; and the second or a fourth reflector disposed, operative, and/or configured for reflecting the light beam passed through the second or the fourth quarter-wave-plate in the first direction back through the second quarter-wave-plate in a second, opposite direction, wherein the light beam reflected by the second or the fourth reflector back through the second or the fourth quarter-wave-plate in the second, opposite direction exits the second or the fourth quarter-wave-plate with a third instance of S-linear polarization and is reflected by the PBS, wherein:
   the third or fourth reflector comprises the same or a different CVBG as the respective first or second reflector.
Clause 10: The dispersion compensator of any one of clauses 7-9, further comprising a half-wave-plate, a phase control means (e.g., an LC retarder), or an optical glass disposed, operative, and/or configured for outputting to the polarized beam splitter (PBS), the light beam having a first instance of S-linear polarization.
Clause 11: The dispersion compensator of any one of clauses 7-10, wherein the CVBG and the optical glass are mounted side-by-side.
Clause 12: The dispersion compensator of any one of clauses 7-11, further comprising a third reflector disposed, operative, and/or configured for receiving and reflecting the light beam having the P-linear polarization or the first instance of S-linear polarization to the first or the second quarter-wave-plate, after passage or reflection of the light beam having the P-linear polarization or the first instance of S-linear polarization through or by the PBS, and for reflecting the light beam exiting the first or the second quarter-wave-plate to the PBS.
Clause 13: The dispersion compensator of any one of clauses 7-12, further including an optical glass or an optical multiplexer (e.g., a z-block) disposed, operative, and/or configured for receiving the light beam having the second instance of S-linear polarization after reflection by the PBS.
Clause 14. The dispersion compensator of any one of clauses 7-13, wherein: the CVBG and the optical glass or the optical multiplexer are mounted side-by-side; and the PBS and the third reflector are mounted proximate or adjacent one end of the side-by-side mounted CVBG and the optical glass or the optical demultiplexer.
Clause 15: The dispersion compensator of any one of clauses 7-14, wherein the CVBG and one of the first and second quarter-wave-plates are mounted in spaced relation.
Clause 16: The dispersion compensator of any one of clauses 7-15, further including a polarizer in the path of the light beam having the second instance S-linear polarization after reflection by the PBS.
Clause 17: The dispersion compensator of any one of clauses 7-16, wherein the PBS and the third reflector are disposed or mounted parallel or perpendicular to each other.
Clause 18: The dispersion compensator of any one of clauses 7-17, further including a phase control means settable between a first state and a second state, wherein the phase control means is disposed, operative, and/or configured whereupon: when set in the first state, the phase control means receives and converts the light beam having the first instance of S-linear polarization to a light beam having a P-linear polarization and outputs the converted light beam having the P-linear polarization to the PBS which passes the converted light beam having the P-linear polarization in a same direction of propagation as the light beam having the first instance of S-linear polarization received by the PBS; and when set in the second state, the phase control means receives and passes the incoming light beam light having the first instance of S-linear polarization to the PBS for reflection by the PBS to the first quarter-wave-plate.
Clause 19: A method of dispersion compensation comprising: receiving and converting, by a phase control means operative in a first state, the light beam of claim 1 having the first instance of S-linear polarization to a light beam having a P-linear polarization and outputting the converted light beam having the P-linear polarization to the polarized beam splitter (PBS) of claim 1 which passes the converted light beam having the P-linear polarization in a same direction of propagation as the light beam having the first instance of S-linear polarization received by the phase control means; and receiving and passing, by the phase control means operative in a second state, the light beam of claim 1 having the first instance of S-linear polarization to the PBS of claim 1 and performing the method of claim 1 on the light beam having the first instance of S-linear polarization passed to the PBS of claim 1 by the phase control means operative in the second state.

Although this disclosure has been described in detail for the purpose of illustration based on what is currently considered to be the most practical and preferred embodiments, it is to be understood that such detail is solely for that purpose and that the disclosure is not limited to the disclosed embodiments, but, on the contrary, is intended to cover modifications and equivalent arrangements that are within the spirit and scope of the appended claims. For example, it is to be understood that the present disclosure contemplates that, to the extent possible, one or more features of any embodiment can be combined with one or more features of any other embodiment.

## Claims

1. A method of dispersion compensation comprising:
(a) reflecting, by a polarized beam splitter (PBS), a light beam having a first instance of S-linear polarization;
(b) passing the reflected light beam of step (a) through a first quarter-wave-plate in a first direction;
(c) reflecting the light beam passed through the first quarter-wave-plate in the first direction in step (b) back through the first quarter-wave-plate in a second, opposite direction, whereupon the light beam has a P-linear polarization;
(d) passing the light beam having the P-linear polarization through the PBS;
(e) following step (d), passing the light beam having the P-linear polarization through a second quarter-wave-plate in a first direction;
(f) reflecting the light beam passed through the second quarter-wave-plate in the first direction in step (e) back through the second quarter-wave-plate in a second, opposite direction, whereupon the light beam has a second instance of S-linear polarization; and
(g) following step (f), reflecting, by the PBS, the light beam of step (f) having the second instance of S-linear polarization, wherein:
the reflecting of step (c) or step (f) includes reflecting by a chirped volume Bragg grating (CVBG), wherein the CVBG reflects spectral components of the light beam at different depths of propagation of said spectral components into the CVBG thereby introducing a delay between said reflected spectral components of the reflected light beam.

2. The method of dispersion compensation of claim 1, wherein the delay includes at least one of:
a positive delay that stretches one or more longer wavelength spectral components; and
a negative delay that compresses one or more shorter wavelength spectral components, wherein the one or more longer wavelength spectral components have longer wavelength(s) than the one or more shorter wavelength spectral components.

3. The method of dispersion compensation of claim 1 or claim 2, further comprising:
prior to step (a), outputting, from a half-wave-plate, a phase control means, or an optical glass to the polarized beam splitter (PBS), the light beam having the first instance of S-linear polarization.

4. The method of dispersion compensation of any preceding claim, further including, one of the following:
between steps (d) - (e), reflecting, by a reflector, the light beam having the P-linear polarization to the second quarter-wave-plate and, between steps (f) - (g), reflecting, by the reflector, the light beam having the second instance of S-linear polarization to the PBS; and
between steps (a) - (b), reflecting, by a reflector, the light beam having the first instance of S-linear polarization to the first quarter-wave-plate and, between steps (c) - (d) reflecting, by the reflector, the light beam having the P-linear polarization to the PBS.

5. The method of dispersion compensation of any preceding claim, wherein step (g) includes reflecting, by the PBS, the light beam of step (f) through an optical glass or an optical multiplexer.

6. The method of dispersion compensation of any preceding claim, further comprising:
(h) following step (g), reflecting, by a second PBS, the light beam having the second instance of S-linear polarization;
(i) passing the reflected light beam of step (h) through the first or a third quarter-wave-plate in a first direction;
(j) reflecting the light beam passed through the first or the third quarter-wave-plate in the first direction in step (i) back through the first or the third quarter-wave-plate in a second, opposite direction, whereupon the light beam has a second instance of P-linear polarization;
(k) passing the light beam having the second instance of P-linear polarization through the second PBS;
(l) following step (k), passing the light beam having the second instance P-linear polarization through the second or a fourth quarter-wave-plate in a first direction;
(m) reflecting the light beam passed through the second or the fourth quarter-wave-plate in the first direction in step (l) back through the second quarter-wave-plate in a second, opposite direction, whereupon the light beam has a third instance of S-linear polarization; and
(n) following step (m), reflecting, by the second PBS, the light beam of step (m) having the third instance of S-linear polarization, wherein:
the reflecting of step (j) or step (m) includes reflecting by the same or a different CVBG as the reflecting in step (c) or step (f), respectively.

7. A dispersion compensator comprising:
a polarized beam splitter (PBS) disposed, operative, and/or configured for receiving and reflecting a light beam having a first instance of S-linear polarization;
a first quarter-wave-plate disposed, operative, and/or configured for passing the light beam reflected by the PBS in a first direction through the first quarter-wave-plate;
a first reflector disposed, operative, and/or configured for reflecting the light beam passed through the first quarter-wave-plate in the first direction back through the first quarter-wave-plate in a second, opposite direction, wherein the light beam reflected by the first reflector back through the first quarter-wave-plate in the second, opposite direction exits the first quarter-wave-plate with a P-linear polarization and passes through the PBS;
a second quarter-wave-plate disposed, operative, and/or configured for passing the light beam having the P-linear polarization that is passed through the PBS in a first direction through the second quarter-wave-plate; and
a second reflector disposed, operative, and/or configured for reflecting the light beam passed through the second quarter-wave-plate in the first direction back through the second quarter-wave-plate in a second, opposite direction, wherein the light beam reflected by the second reflector back through the second quarter-wave-plate in the second, opposite direction exits the second quarter-wave-plate with a second instance of S-linear polarization and is reflected by the PBS, wherein:
the first or second reflector comprises a chirped volume Bragg grating (CVBG), wherein the CVBG reflects spectral components of the reflected light beam at different depths of propagation of said spectral components into the CVBG thereby introducing a delay between said reflected spectral components of the reflected light beam.

8. The dispersion compensator of claim 7, wherein the delay includes at least one of:
a positive delay that stretches one or more longer wavelength spectral components; and
a negative delay that compresses one or more shorter wavelength spectral components, wherein the one or more longer wavelength spectral components have longer wavelength(s) than the one or more shorter wavelength spectral components.

9. The dispersion compensator of claim 7 or claim 8, further including:
a second PBS disposed, operative, and/or configured for receiving and reflecting the light beam having the second instance of S-linear polarization that was reflected by the PBS;
the first or a third quarter-wave-plate disposed, operative, and/or configured for passing the light beam reflected by the second PBS in a first direction through the first or third quarter-wave-plate;
the first or a third reflector disposed, operative, and/or configured for reflecting the light beam passed through the first or the third quarter-wave-plate in the first direction back through the first of the third quarter-wave-plate in a second, opposite direction, wherein the light beam reflected by the first or the third reflector back through the first or the third quarter-wave-plate in the second, opposite direction exits the first or the third quarter-wave-plate with a second instance of P-linear polarization and passes through the second PBS;
the second or a fourth quarter-wave-plate disposed, operative, and/or configured for passing the light beam having the second instance of P-linear polarization that is passed through the PBS in a first direction through the second or the fourth quarter-wave-plate; and
the second or a fourth reflector disposed, operative, and/or configured for reflecting the light beam passed through the second or the fourth quarter-wave-plate in the first direction back through the second quarter-wave-plate in a second, opposite direction,
wherein the light beam reflected by the second or the fourth reflector back through the second or the fourth quarter-wave-plate in the second, opposite direction exits the second or the fourth quarter-wave-plate with a third instance of S-linear polarization and is reflected by the PBS, wherein:
the third or fourth reflector comprises the same or a different CVBG as the respective first or second reflector.

10. The dispersion compensator of any of claims 7 to 9, further comprising a half-wave-plate, a phase control means, or an optical glass disposed, operative, and/or configured for outputting to the polarized beam splitter (PBS), the light beam having a first instance of S-linear polarization and optionally wherein the CVBG and the optical glass are mounted side-by-side.

11. The dispersion compensator of any of claims 7 to 10, further comprising a third reflector disposed, operative, and/or configured for receiving and reflecting the light beam having the P-linear polarization or the first instance of S-linear polarization to the first or the second quarter-wave-plate, after passage or reflection of the light beam having the P-linear polarization or the first instance of S-linear polarization through or by the PBS, and for reflecting the light beam exiting the first or the second quarter-wave-plate to the PBS.

12. The dispersion compensator of any of claims 7 to 11, further including an optical glass or an optical multiplexer disposed, operative, and/or configured for receiving the light beam having the second instance of S-linear polarization after reflection by the PBS and optionally wherein:
the CVBG and the optical glass or the optical multiplexer are mounted side-by-side; and
the PBS and the third reflector are mounted proximate or adjacent one end of the side-by-side mounted CVBG and the optical glass or the optical demultiplexer;
further optionally wherein the CVBG and one of the first and second quarter-wave-plates are mounted in spaced relation;
and/or further including a polarizer in the path of the light beam having the second instance S-linear polarization after reflection by the PBS;
and/or wherein the PBS and the third reflector are disposed or mounted parallel or perpendicular to each other.

13. The dispersion compensator of claim 10, further including a phase control means settable between a first state and a second state, wherein the phase control means is disposed, operative, and/or configured whereupon:
when set in the first state, the phase control means receives and converts the light beam having the first instance of S-linear polarization to a light beam having a P-linear polarization and outputs the converted light beam having the P-linear polarization to the PBS which passes the converted light beam having the P-linear polarization in a same direction of propagation as the light beam having the first instance of S-linear polarization received by the PBS; and
when set in the second state, the phase control means receives and passes the incoming light beam light having the first instance of S-linear polarization to the PBS for reflection by the PBS to the first quarter-wave-plate.

14. A method of dispersion compensation comprising:
receiving and converting, by a phase control means operative in a first state, the light beam of any of claims 1 to 6 having the first instance of S-linear polarization to a light beam having a P-linear polarization and outputting the converted light beam having the P-linear polarization to the polarized beam splitter (PBS) of any of claims 1 to 6 which passes the converted light beam having the P-linear polarization in a same direction of propagation as the light beam having the first instance of S-linear polarization received by the phase control means; and
receiving and passing, by the phase control means operative in a second state, the light beam of any of claims 1 to 6 having the first instance of S-linear polarization to the PBS of any of claims 1 to 6 and performing the method of any of claims 1 to 6 on the light beam having the first instance of S-linear polarization passed to the PBS of any of claims 1 to 6 by the phase control means operative in the second state.
